# EUROPÄISCHE PATENTANMELDUNG

(11) **EP 4 659 878 A1**
(43) Veröffentlichungstag der Anmeldung: **10.12.2025**
(21) Anmeldenummer: 25174851.3
(22) Anmeldetag: 07.05.2025
(51) Int. Cl.: B22F 3/10, B22F 7/06, B22F 7/08, B22F 10/14, B22F 10/28, B33Y 10/00, B33Y 80/00, B05B 1/04, B05B 7/08, B05B 13/04, B05B 15/55, B05B 15/65, B05C 5/02

(54) **VERFAHREN ZUR HERSTELLUNG EINER BAUEINHEIT UND VERFAHREN ZUR ZUMINDEST BEREICHSWEISEN BESCHICHTUNG UND/ODER ABDICHTUNG EINER KAROSSERIEEINHEIT**

(30) Priorität: 06.06.2024 DE 102024205201
(71) Anmelder: VOLKSWAGEN AG, 38440 Wolfsburg (DE)
(72) Erfinder: Rütjes, Alexander, 38440 Wolfsburg (DE)

(57) **Zusammenfassung**

Die Erfindung betrifft ein Verfahren zur Herstellung einer Baueinheit sowie ein Verfahren zur zumindest bereichsweisen Beschichtung und/oder Abdichtung einer Karosserieeinheit mit der Baueinheit.

Bei dem Verfahren zur Herstellung einer Baueinheit (1), umfassend ein erstes Bauteil (2) und ein zweites Bauteil (3), wird das erste Bauteil (2) in einem ersten additiven Fertigungsverfahren hergestellt und es wird ein Grünteil (4) des zweiten Bauteils (3) in einem zweiten additiven Fertigungsverfahren hergestellt, das erste Bauteil (2) und das Grünteil (4) werden mechanisch miteinander verbunden und danach gemeinsam erwärmt, wobei das Grünteil (4) durch die Wärmezufuhr gesintert wird und dabei die mechanische Verbindung (10) zwischen dem ersten Bauteil (2) und dem erzeugten zweiten Bauteil (3) durch Sinterfügen gefestigt wird.

## Beschreibung

Die Erfindung betrifft ein Verfahren zur Herstellung einer Baueinheit, sowie ein Verfahren zur zumindest bereichsweisen Beschichtung und/oder Abdichtung einer Karosserieeinheit mit der Baueinheit.

Karosseriebauteile weisen oftmals Elemente mit einem Blechfalz auf, wobei ein Blechelement um eine Kante gebogen ist. Derartige Blechfalze sind besonders anfällig für Spaltkorrosion, weshalb es gilt, das Eindringen von Feuchtigkeit zu verhindern, um eine lange Lebensdauer der Karosseriebauteile zu gewährleisten. Dies kann beispielsweise durch eine Beschichtung des Blechfalzes mit einem Abdichtmaterial realisiert werden. Insbesondere im Fahrzeugbau sind die Blechfalze oftmals schwer zu erreichen und abzudichten. Es ist bekannt, dass für eine effektive Abdichtung besagter Blechfalze kleine und teilweise dünnwandige Düsenwerkzeuge eingesetzt werden, die von einer Robotereinheit entlang des Blechfalzes bewegt werden können und dabei ein Abdichtungsmaterial von einer Rückseite auf die Blechfalz aufbringen.

Da dazu oft händisch Betriebsmittel an den Blechbauteilen eingesetzt werden, um einen ausreichend großen Spalt für das Düsenwerkzeug zu erzeugen und freizuhalten, kann es zu Fehlern hinsichtlich der Relativposition des Düsenwerkzeugs in Bezug zum Karosseriebauteil und/oder zur Abnutzung der Betriebsmittel kommen, die dann ebenfalls Fehler in der Relativpositionierung hervorrufen kann. Infolgedessen werden die Düsenwerkzeuge oftmals zerstört, was zu einem hohen Bedarf an Ersatz führt. Da die Herstellung der Düsenwerkzeuge jedoch sehr kostenintensiv ist, entstehen dadurch beträchtliche Kosten. Teilweise werden die Düsenwerkzeuge handgeschweißt oder additiv als ein Bauteil gefertigt. Gerade bei der additiven Fertigung wird aufgrund der komplexen Geometrien viel Stützmaterial benötigt, was hohe Kosten und hohen Zeitaufwand verursacht. Zudem ist die Qualität oft unzureichend.

Der Stand der Technik zeigt verschiedene Düsenwerkzeuge und Ansätze zu deren Herstellung.

In der EP 2 282 845 B1 wird ein Applikator offenbart zur Applikation eines Beschichtungsmittels auf ein Bauteil, insbesondere zur Applikation einer Dichtmasse auf eine Bördelnaht an einer Rückseite eines Kraftfahrzeug-Karosseriebauteils, insbesondere durch einen Spalt zwischen zwei überlappenden Kraftfahrzeug-Karosseriebauteilen. Dieser Applikator umfasst eine Düse zur Abgabe des Beschichtungsmittels auf die Rückseite des Bauteils und einen langgestreckten, gekrümmten Düsenträger, um die Düse von der Vorderseite des zu beschichtenden Bauteils ausgehend auf der Rückseite des zu beschichtenden Bauteils zu positionieren. Es wird vorgeschlagen, dass der Düsenträger mehrfach gekrümmt ist, sodass der Applikator durch den Spalt hindurchgeführt werden kann.

Die US 11896 995 B2 offenbart einen Applikator zum Auftragen eines Beschichtungsmittels auf ein Bauteil, mit einer Düse zum Ausbringen des Beschichtungsmittels und einem länglichen Düsenträger, der die Düse trägt. Hier ist vorgesehen, dass der Düsenträger einen Fließbereich aufweist, in dem der Düsenträger wesentlich weniger biegesteif ist als im übrigen Teil des Düsenträgers, um bei einer Berührung zwischen dem Applikator und dem zu beschichtenden Bauteil elastisch auf Kontaktkräfte reagieren zu können.

In der US 20230 405 617 A1 wird ein Verfahren zur Herstellung einer Sprühdüseneinrichtung, insbesondere zum Besprühen eines Gießstranges beim Gießen von metallischen Produkten beschrieben. Dabei umfasst die Sprühdüseneinrichtung einen Grundkörper mit einem Lufteinlass, einem Wassereinlass und einem Düsenkörper mit einer Mischkammer zur Erzeugung eines Luft-Wasser-Gemisches, das durch mindestens einen Düsenauslass austritt. Der Lufteinlass wird durch mindestens eine Lufteinlassdüse gebildet, die mit einer Düsenspitze in die Mischkammer ragt und mindestens eine Luftaustrittsöffnung aufweist. Der Wassereinlass mündet nahe der Düsenspitze des Lufteinlasses durch mindestens eine quer zu einer Längsachse der Mischkammer ausgerichtete Wasseraustrittsöffnung in die Mischkammer. Außerdem ist mindestens ein Teilbereich der Sprühdüsenvorrichtung durch ein generatives Fertigungsverfahren, vorzugsweise ein 3D-Druckverfahren, hergestellt.

Die US 2023 023 4082 A1 offenbart ein Verfahren zur Herstellung eines Düsenkörpers. Das Verfahren umfasst die zumindest teilweise Bearbeitung eines Düsenkörper-Rohlings, der entweder durch ein Spritzgussverfahren oder ein laserbasiertes 3D-Druckverfahren hergestellt wurde. Der Düsenkörper umfasst einen kegelstumpfförmigen Abschnitt, mindestens eine Düsenbohrung mit einem Durchmesser von weniger als oder gleich 300 µm, die den kegelstumpfförmigen Abschnitt mit einer Außenseite des Düsenkörpers verbindet, und mindestens einen Turbulenzkanal, der so konfiguriert ist, dass er mit dem kegelstumpfförmigen Abschnitt in Verbindung steht und sich in einer Richtung zum kegelstumpfförmigen Abschnitt hin verjüngt.

Der vorliegenden Erfindung liegt die Aufgabe zugrunde, ein Verfahren zur Herstellung einer Baueinheit sowie ein Verfahren zur zumindest bereichsweisen Beschichtung und/oder Abdichtung einer Karosserieeinheit zur Verfügung zu stellen, mit denen in kostengünstiger Weise eine Baueinheit in ausreichender Qualität fertigbar und mit der Baueinheit ein Beschichtungs- und/oder Abdichtungsprozess ausführbar ist.

Die Aufgabe wird erfindungsgemäß gelöst durch das Verfahren zur Herstellung einer Baueinheit nach Anspruch 1 sowie das Verfahren zur zumindest bereichsweisen Beschichtung und/oder Abdichtung einer Karosserieeinheit nach Anspruch 15. Vorteilhafte Ausgestaltungen des Verfahrens zur Herstellung einer Baueinheit sind in den Unteransprüchen 2 bis 14 angegeben.

Ein erster Aspekt der Erfindung ist ein Verfahren zur Herstellung einer Baueinheit, umfassend ein erstes Bauteil und ein zweites Bauteil, bei dem das erste Bauteil in einem ersten additiven Fertigungsverfahren hergestellt wird, ein Grünteil des zweiten Bauteils in einem zweiten additiven Fertigungsverfahren hergestellt wird, das erste Bauteil und das Grünteil mechanisch miteinander verbunden werden und danach gemeinsam erwärmt werden, wobei das Grünteil durch die Wärmezufuhr gesintert wird und dabei die mechanische Verbindung zwischen dem ersten Bauteil und dem erzeugten zweiten Bauteil durch Sinterfügen gefestigt wird.

Dabei kann das erste Bauteil aus Metall gefertigt werden, während das zweite Bauteil bzw. dessen Grünteil beispielsweise aus Metall oder Keramik hergestellt werden kann.

Eine Verfestigung des Grünteils des zweiten Bauteils via Sintern kann dabei ein vom zweiten Fertigungsverfahren inhärenter Prozessschritt sein. Der Verfahrensschritt des Sinterfügens zwischen dem ersten Bauteil und zweiten Bauteil bzw. dessen Grünteils kann gleichzeitig zur Sinterverfestigung des Grünteils im selben Prozessschritt stattfinden.

Beim Sintern verändert sich die Struktur des Grünteils des zweiten Bauteils, wobei das Grünteil unter Wärmeinwirkung seine endgültige Festigkeit erlangt. Dieser Prozess findet beispielsweise in einem Ofen statt. Dabei agglomerieren die einzelnen Partikel des Grünteils. Gegebenenfalls kann der Sinterprozess auch unter einem erhöhten oder reduzierten Umgebungsdruck im Vergleich zum normalen Luftdruck durchgeführt werden.

Beim Sinterfügen wird eine kraftschlüssige, formschlüssige und/oder stoffschlüssige Verbindung zwischen dem ersten Bauteil und dem zweiten Bauteil erzeugt. Es wird die mechanische Verbindungsfestigkeit gegenüber der zuvor hergestellten mechanischen Verbindung zwischen dem ersten Bauteil und dem Grünteil erhöht und/oder Freiheitsgrade der beiden Bauteile relativ zueinander durch das Sinterfügen blockiert. Dabei muss zumindest das zweite Bauteil als unversintertes Grünteil vorliegen. Außerdem müssen das erste Bauteil und das Grünteil des zweiten Bauteils während des Sinterprozesses mechanischen Kontakt haben.

Das erste Bauteil kann beispielsweise aufgrund seiner Komplexität und Dünnwandigkeit in einem ersten additiven Fertigungsverfahren gefertigt werden, mit welchem eine kosteneffiziente Fertigung des ersten Bauteils mit den gewünschten Bauteileigenschaften möglich ist. Das Grünteil des zweiten Bauteils kann wegen der Einfachheit seiner Form mit einem zweiten additiven Fertigungsverfahren hergestellt werden, welches gegebenenfalls kostengünstiger ist.

Durch die Nutzung von zwei unterschiedlichen additiven Fertigungsverfahren und dem Sinterfügen lassen sich die Vorteile der beiden additiven Fertigungsverfahren kombinieren, um unterschiedliche Anforderungen an das erste und das zweite Bauteil zu erfüllen. Diese Herangehensweise kann eine präzise Fertigung der gegebenenfalls unterschiedlichen Einzelgeometrien als auch der Gesamtgeometrie der Baueinheit ermöglichen.

Es kann vorgesehen sein, dass das erste Bauteil mittels Laserstrahlschmelzen hergestellt wird.

Laserstrahlschmelzen kann auch als Selektives Laserschmelzen bezeichnet werden, wobei bei dem besagten additiven Fertigungsverfahren mittels eines Lasers schichtweise metallisches Pulver lokal aufgeschmolzen wird und somit das erste Bauteil aufgebaut wird. Das erste Bauteil erreicht dabei direkt nach dieser additiven Fertigung seine volle Festigkeit.

Beim ersten Bauteil kann es sich um ein dünnwandiges Bauteil handeln, dessen komplexe Strukturen und Größe geeignet sind, um mittels Laserstrahlschmelzen erzeugt zu werden. Das erste Bauteil kann beispielsweise eine längliche Form mit einem im Wesentlichen runden Querschnitt haben mit einem Durchmesser von bereichsweise 1 mm bis 2,5 mm, wie z.B. 1,5 mm bis 2 mm.

Alternativ kann das erste Bauteil beispielsweise mittels Elektronenstrahlschmelzen gefertigt werden.

Außerdem kann das Grünteil des zweiten Bauteils mittels Binder Jetting hergestellt werden.

Beim Binder Jetting handelt es sich um ein Freistrahl-Verfahren, bei dem das Grünteil des zweiten Bauteils schichtweise durch Auftrag von pulverförmigem Material und Auftrag von Bindemittel aufgebaut wird. Im erzeugten Grünteil verbleibt dabei zunächst das Bindemittel, wobei dieses danach durch einen späteren thermischen oder katalytischen Prozessschritt beseitigt werden kann. Das Bindemittel kann beispielsweise latexbasiert sein. Die endgültige Festigkeit des zweiten Bauteils wird erst durchs Sintern in einem dem Binder Jetting nachgeschalteten Prozessschritt erreicht.

Das zweite Bauteil kann eine einfache, dickwandige Form, beispielsweise eine im Wesentlichen quaderförmige Form mit einer ähnlichen Wandstärke über das gesamte Bauteil hinweg, haben, dessen Geometrie und Größe dazu geeignet ist, das Grünteil des zweiten Bauteils via Binder Jetting herzustellen. Das Grünteil kann darüber hinaus in zumindest einer möglichen Druckausrichtung ohne Überhänge sein. Das zweite Bauteil kann dabei mit einem geringen Zeitaufwand, kostengünstig und mit einer ausreichenden Qualität und einer hohen Fertigungsrobustheit hergestellt werden.

Zudem können mehrere Grünteile des zweiten Bauteils parallel in einem Pulverbecken via Binder Jetting hergestellt werden. Die Form des Grünteils kann eine bauraumausnutzende Stapelung von mehreren Grünteilen im Pulverbett des Binder Jettings ermöglichen.

Beim Binder Jetting kann oftmals feineres Pulver als beim Laserstrahlschmelzen eingesetzt werden, was zu einer glatteren und damit verbesserten Oberflächenbeschaffenheit führen kann.

Alternativ kann das Grünteil beispielsweise mittels 3D-Siebdruckverfahren hergestellt werden.

Das erste Bauteil kann ein erstes Verhältnis R1 zwischen seinem Volumen und seiner äußeren Oberfläche aufweisen, und das Grünteil des zweiten Bauteils kann ein zweites Verhältnis R2 zwischen seinem Volumen und seiner äußeren Oberfläche aufweisen, wobei das Verhältnis R2 größer als das Verhältnis R1 ist.

Folglich kann es sich bei dem ersten Bauteil um ein dünnwandiges Bauteil handeln, das ein kleines Volumen, aber eine große Oberfläche hat. Im Gegensatz dazu kann das Grünteil des zweiten Bauteils eine dickwandige Form haben, welche ein großes Volumen, aber eine vergleichsweise kleine Oberfläche hat.

Dabei kann das Volumen des Grünteils des zweiten Bauteils größer sein als das Volumen des ersten Bauteils.

Durch die unterschiedlichen Verhältnisse R1 und R2 der beiden Bauteile und damit gegebenenfalls andersartigen Geometrien bezüglich der Wandstärken können die beiden additiven Fertigungsverfahren zur Herstellung des ersten Bauteils und des Grünteils des zweiten Bauteils derart ausgewählt sein, dass die Wandstärken der beiden Bauteile mit dem jeweiligen Fertigungsverfahren kostengünstig mit der erforderlichen Qualität hergestellt werden können.

Es kann vorgesehen sein, dass beim Sintern und Sinterfügen eine Erwärmung mit einer Temperaturabfolge mit mindestens zwei verschiedenen Temperaturen durchlaufen wird und bei einer ersten niedrigeren Temperatur eine Entbinderung des Grünteils des zweiten Bauteils stattfindet und danach bei einer zweiten höheren Temperatur die Sinterung des Grünteils und die Festigung der mechanischen Verbindung mit dem ersten Bauteil stattfindet. Dabei sind beide Temperaturen geringer als die Schmelztemperaturen der Materialien des Grünteils und des ersten Bauteils.

Die Temperaturabfolge kann auch als Sinterzyklus bezeichnet werden und dabei mehrere Stunden umfassen. Die niedrigere und/oder höhere Temperatur kann im Zuge der Erwärmung jeweils für mehrere Stunden konstant gehalten werden. Es kann sich bei der niedrigeren und/oder höheren Temperatur außerdem um Temperaturbereiche handeln.

Bei der Entbinderung wird das Grünteil vom Bindemittel befreit, wobei das Bindemittel beispielsweise unter Wärmeeinwirkung verbrennt oder sich durch Pyrolyse zersetzt. Dieser Prozess kann beispielsweise in sauerstoffhaltiger Ofenatmosphäre oder in inerter Ofenatmosphäre sowie unter reduzierender Ofenatmosphäre z.B. unter Wasserstoff stattfinden.

Beispielsweise kann bei einem metallischen zweiten Bauteil die Temperaturabfolge insgesamt 15 h bis 20 h, wie z.B. 18,5 h umfassen, wobei für die Entbinderung ein Temperaturbereich der niedrigeren Temperatur zwischen 300°C bis 500°C für 3 h bis 5 h, wie z.B. 4 h, gehalten wird und die Sinterung und Sinterfügung in einem Temperaturbereich der höheren Temperatur zwischen 900°C bis 1400°C stattfindet, wobei der Temperaturbereich für 4 h bis 6 h, wie z.B. 5h, gehalten wird.

Das Grünteil des zweiten Bauteils kann eine ebene Unterseite aufweisen, auf welche beim Erwärmungsprozess das Grünteil zusammen mit dem zuvor mechanisch verbundenen ersten Bauteil gestellt werden kann.

Gegebenenfalls werden die mechanisch verbunden Bauteile für das Sintern und Sinterfügen auf eine Keramikplatte platziert und auf dieser Keramikplatte erwärmt.

Durch die Temperaturabfolge mit zumindest zwei verschiedenen Temperaturen kann eine vollständige Entbinderung und eine qualitativ hochwertige Sinterung mit guten Festigkeitswerten des zweiten Bauteils erreicht werden.

In einer vorteilhaften Ausgestaltung des Verfahrens wird die mechanische Verbindung des ersten Bauteils und des Grünteils des zweiten Bauteils durch ein Einstecken eines einzusteckenden Abschnitts des ersten Bauteils mit einer Bewegung mit zumindest einer translatorischen Komponente entlang einer Einsteckrichtung in eine Aussparung des Grünteils realisiert.

Das heißt, dass vor dem Sinterfügen der Abschnitt des ersten Bauteils entlang einer Einsteckrichtung in die Aussparung des Grünteils des zweiten Bauteils eingesteckt wird.

Dabei sind der einzusteckende Abschnitt und die Aussparung in ihrer Form und Größe zueinander komplementär ausgeführt. Der einzusteckende Abschnitt und die Aussparung können beispielsweise im Wesentlichen einen runden oder ovalen Querschnitt aufweisen. Zudem kann vor der Erwärmung zwischen dem einzusteckenden Abschnitt und der Aussparung eine Spielpassung ausgebildet sein.

Sowohl der einzusteckende Abschnitt als auch die Aussparung können additiv erzeugt werden und/oder durch Nachbearbeitung des ersten Bauteils oder des Grünteils des zweiten Bauteils entstehen.

Durch das Einstecken können das Grünteil des zweiten Bauteils und das erste Bauteil in einfacher Weise zueinander ausgerichtet und mechanisch verbunden werden und somit für das Sinterfügen vorbereitet werden.

In einer Ausführungsform des Verfahrens wird der einzusteckende Abschnitt des ersten Bauteils dickwandiger als andere Bestandteile des ersten Bauteils gefertigt, da das Material im Zuge der Erwärmung beim Sinterfügen Festigkeit und Elastizität einbüßen kann. Außerdem kann durch eine Aufdickung des einzusteckenden Abschnitts mehr Stabilität der Baueinheit gewährleistet werden.

Im Falle eines langgestreckten ersten Bauteils mit einem runden Querschnitt kann der Durchmesser des einzusteckenden Abschnitts beispielsweise um 30 % bis 50 %, z.B. von 1,8 mm auf 2,5 mm, aufgedickt sein.

Des Weiteren kann am einzusteckenden Abschnitt des ersten Bauteils ein Formelement angeordnet sein und das Grünteil des zweiten Bauteils kann eine Formelementaufnahme umfassen, welche zumindest ein Blockadeelement aufweist, mit dem beim Einstecken des einzusteckenden Abschnitts in die Aussparung wenigstens ein translatorischer Freiheitsgrad und/oder rotatorischer Freiheitsgrad des einzusteckenden Abschnitts in zumindest einer Bewegungsrichtung in Bezug auf das Grünteil des zweiten Bauteils blockierbar ist.

Das Formelement kann beispielsweise fahnenförmig sein. Zudem kann das Formelement seitlich am einzusteckenden Abschnitt angeordnet sein und sich zum Beispiel in eine Richtung quer zur Einsteckrichtung erstrecken. Dementsprechend kann die Formelementaufnahme durch eine Nut in der Wandung des Formelements ausgeführt sein.

Ein erstes Blockadeelement kann die Drehung des Formelements verhindern. Zusätzlich kann ein zweites Blockadeelement vorhanden sein, welches ein weiteres Einstecken blockiert. Oder es gibt ein einzelnes Blockadeelement, welches eine Kombination des ersten und zweiten Blockadeelements ist.

Beispielsweise kann der rotatorische Freiheitsgrad des einzusteckenden Abschnitts um die Achse der Einsteckrichtung durch das Blockadeelement blockiert werden. Durch eine solche Blockierung kann die Winkelposition und somit die Ausrichtung des ersten Bauteils zum Grünteil des zweiten Bauteils definiert werden. Es ist zudem möglich, dass das Formelement eine erste Anschlagsfläche und die Formelementaufnahme ein Blockadeelement mit einer zweiten Anschlagsfläche aufweist, und mit einem Kontakt der beiden Anschlagsflächen die Einstecktiefe des einzusteckenden Abschnitts in die Aussparung begrenzt wird.

Außerdem kann die Stabilität der mechanischen Verbindung vor der Sinterfügung zwischen dem ersten Bauteil und dem Grünteil durch das eingesteckte Formelement in die Formelementaufnahme erhöht werden, da das Formelement als zusätzliches Stützelement fungieren kann und gegebenenfalls die Kontaktfläche zwischen dem ersten Bauteil und dem Grünteil des zweiten Bauteils vergrößert ist. Die Montage, also das mechanische Verbinden des ersten Bauteils und des Grünteils des zweiten Bauteils kann insofern vereinfacht werden, als dass die Ausrichtung bezüglich der Winkelposition zwischen dem Bauteil und Grünteil durch das Formelement und die Formelementaufnahme vorgegeben sein kann.

Sowohl das Formelement als auch die Formelementaufnahme können additiv während des ersten oder zweiten additiven Fertigungsverfahren erzeugt werden.

Das Grünteil des zweiten Bauteils kann beim Sintern durch Schwindung um mindestens 5 % in wenigstens eine Richtung schrumpfen, wodurch zumindest teilweise eine kraftschlüssige und/oder formschlüssige Verbindung zum ersten Bauteil durch eine Presspassung und/oder einen Formschluss hergestellt werden kann.

Die Schwindung entsteht dadurch, dass die Lücken zwischen den einzelnen Partikeln des Pulvers des Grünteils des zweiten Bauteils beim Sintern geschlossen werden und damit der Raum effizienter ausgefüllt wird. Dabei kann die Schwindung in unterschiedlichen Richtungen unterschiedlich groß ausfallen. Beispielsweise kann die Schwindung 15 % in einer Richtung parallel zu den durch die additive Fertigung erzeugten Schichten des Grünteils betragen und 18 % in Stapelrichtung quer zu den Schichten der additiven Fertigung.

Im Falle eines vom ersten Bauteil ausgeformten einzusteckenden Abschnitts, der in eine vom Grünteil ausgeformte Aussparung eingesteckt ist, kann beispielsweise an diesem Bereich eine kraftschlüssige Pressverbindung realisiert werden, wobei das Grünteil bei der Sinterung schrumpft und somit einen äußeren Teil einer Pressverbindung bildet, während das erste Bauteil einen inneren Teil bildet.

Ebenfalls kann durch die Größenveränderung des Grünteils im ersten oder zweiten Bauteil ein formschlüssiges Eingreifen in einen Hinterschnitt des jeweiligen anderen Bauteils des ersten oder zweiten Bauteils realisiert werden und somit die mechanische Verbindung gefestigt werden. Der Hinterschnitt kann dabei in der additiven Fertigung erzeugt werden.

Außerdem können die Materialien des ersten Bauteils und des Grünteils des zweiten Bauteils beim Sinterfügen zumindest teilweise eine stoffschlüssige Verbindung eingehen.

Zwischen dem ersten Bauteil und dem zweiten Bauteil können sich beim Sinterfügen stoffschlüssigen Brücken ausbilden. Damit kann eine verfestigte mechanische Verbindung realisiert werden, die gegebenenfalls robuster ist als eine rein formschlüssige und/oder kraftschlüssige Verbindung.

Dabei müssen die beiden Materialien insofern miteinander kompatibel sein, als dass sie eine chemische Verbindung eingehen können.

Es kann sich bei stoffschlüssig kompatiblen Materialien um zwei identische oder unterschiedliche Materialien handeln. Beispielsweise kann das erste Bauteil aus einem martensitaushärtbaren Stahl wie 1.2709 oder aus einem 1.209 substituierenden Stahl wie M789 sowie das Grünteil des zweiten Bauteils aus einem Edelstahl wie 1.4404 gefertigt sein, wobei die Stahlkombination beim Sinterfügen eine stoffschlüssige Verbindung eingehen kann. Ebenfalls ist eine Kombination aus M789 und 1.4548 oder M789 und 1.3343 möglich.

In einer Ausführungsform des Verfahrens kann bei der Herstellung des ersten Bauteils am einzusteckenden Abschnitt zumindest bereichsweise eine raue Oberfläche mit einer gemittelten Rautiefe Rz zwischen 50 µm und 80 µm erzeugt werden, durch welche beim Einstecken des einzusteckenden Abschnitts in die Aussparung des Grünteils von der Wandung der Aussparung Material abgerieben wird, welches beim Sinterfügen eine stoffschlüssige Verbindungsfestigkeit erhöht.

Versuche haben ergeben, dass die stoffschlüssige Verbindungsfestigkeit erhöht werden kann, wenn abgeriebenes Material zwischen den Bauteilen dem Sinterprozess ausgesetzt wird.

Die Erzeugung der rauen Oberfläche kann dabei durch eine entsprechende Positionierung des Druckjobs des ersten Bauteils im ersten additiven Fertigungsverfahren erfolgen, da beispielsweise beim Laserstrahlschmelzen bezüglich des Pulverbetts vertikal überhängende Seiten eine größere Oberflächenrauheit aufweisen. Das erste Bauteil kann folglich weitere Oberflächen aufweisen, die weniger rau als die raue Oberfläche des einzusteckenden Abschnitts sind.

Gegebenenfalls kann der Querschnitt des ersten Bauteils durch die raue Oberfläche eine ovale Form aufweisen. Ebenfalls kann die Aussparung im Grünteil des zweiten Bauteils oval ausgeführt sein, um eine durch die raue Oberfläche erzeugten ovalen Querschnitt des einzusteckenden Abschnitts zu berücksichtigen. Beispielsweise kann der Querschnitt des ersten Bauteils durch die Rauheit in eine Richtung zwischen 0,05 % und 0,15 % vom Durchmesser einer Kreisform abweichen.

In einer Ausführungsform des Verfahrens weist der einzusteckende Abschnitt des ersten Bauteils eine erste Längsachse, das erste Bauteil eine Schwerachse, welche abweichend von der ersten Längsachse verläuft, und die Aussparung des Grünteils des zweiten Bauteils eine zweite Längsachse auf. Dabei werden das erste Bauteil und das Grünteil des zweiten Bauteils derart zueinander positioniert, dass die Längsachsen miteinander fluchten, wobei die Einsteckrichtung von einer durch die Öffnung der Aussparung an der dem ersten Bauteil zugewandten Seite verlaufenden Vertikalen abweichend verläuft, und zwar an einer der Schwerachse abgewandten Seite der Vertikalen.

Die Einsteckrichtung liegt dabei von der Vertikalen abweichend in einer Ebene, in der auch die Schwerachse und die erste Längsachse liegen.

Das heißt, es werden das erste Bauteil und das Grünteil des zweiten Bauteils zunächst derart positioniert, dass die beiden Längsachsen fluchten, um den einzusteckenden Abschnitt in die Aussparung einstecken zu können und eine mechanische Verbindung herzustellen. Nach Herstellung der mechanischen Verbindung durch Einstecken des einzusteckenden Abschnitts des ersten Bauteils in die Aussparung des Grünteils des zweiten Bauteils weisen beide Bauteile jeweils die Bauteilorientierung auf, mit der sie sintergefügt werden.

Beispielsweise wird eine vertikale zweite Längsachse der Aussparung im Grünteil nach dem Sintern und Sinterfügen angestrebt. Jedoch kann sich die Schwerachse des ersten Bauteils von der ersten Längsachse seines einzusteckenden Abschnitts unterscheiden und somit der Schwerpunkt des ersten Bauteils sich neben der ersten Längsachse befinden. Das Grünteil kann unter Wärmeinwirkung weich werden und ein durch die Gewichtskraft bewirktes, im ersten Bauteil anliegendes Drehmoment kann während des Sintervorgangs zu einer Verkippung der Aussparung im Grünteil führen. Um dies auszugleichen kann die Aussparung zunächst derart im Grünteil des zweiten Bauteils hergestellt werden, dass die Längsachse der Aussparung und damit die Einsteckrichtung um 0,5° bis 2°, z.B. 1°, gegenüber der Vertikalen in eine von der Schwerachse des ersten Bauteils abgewandten Richtung geneigt ist. Im Zuge des Sinterns kann das vom ersten Bauteil bewirkte Drehmoment dann dazu führen, dass die Neigung ausgeglichen wird und die zweite Längsachse der Aussparung und die erste Längsachse des einzusteckenden Abschnitts des ersten Bauteils nach dem Sintervorgang im Wesentlichen vertikal und deckungsgleich verlaufen.

Es kann vorgesehen sein, dass sowohl bei der Herstellung des ersten Bauteils eine erste Fluidleiteinrichtung als auch bei der Herstellung des Grünteils des zweiten Bauteils eine zweite Fluidleiteinrichtungen in dem jeweiligen Bauteil oder Grünteil erzeugt werden, und dass das erste Bauteil und das Grünteil anschließend derart mechanisch miteinander verbunden werden und deren Verbindung mittels Sinterfügen gefestigt wird, dass die Fluidleiteinrichtungen in der Baueinheit strömungstechnisch in Verbindung stehen.

Durch die strömungstechnisch verbundenen Fluidleiteinrichtungen kann in der Baueinheit ein Fluid vom zweiten Bauteil in das erste Bauteil oder umgekehrt geleitet werden. Die strömungstechnische Verbindung kann dabei beispielsweise einem Fluiddruck von bis zu 75 bar standhalten.

Die Fluidleiteinrichtungen können dabei additiv erzeugt werden und/oder durch Nachbearbeitung in einem subtraktiven Prozessschritt in das erste Bauteil oder das Grünteil des zweiten Bauteils eingebracht werden. Ebenfalls sind Mischformen denkbar, bei denen die Fluidleiteinrichtungen nur teilweise additiv entstehen.

Die erste Fluidleiteinrichtung im ersten Bauteil kann durch dessen einzusteckenden Abschnitt führen, wobei endseitig am einzusteckenden Abschnitt eine erste Fluidöffnung angeordnet sein kann, mit der die strömungstechnische Verbindung zu einer zweiten Fluidleiteinrichtung mit einer zweiten Fluidöffnung im zweiten Bauteil hergestellt werden kann. Die zweite Fluidöffnung der zweiten Fluidleiteinrichtung kann beispielsweise in der Aussparung des zweiten Bauteils angeordnet sein.

Dabei kann die Größe der Aussparung im Grünteil des zweiten Bauteils und die Größe des einzusteckenden Abschnitts des ersten Bauteils in einem derartigen Verhältnis zueinander hergestellt werden, dass nach dem Sinterfügen eine flüssigkeitsdichte und luftdurchlässige Verbindung der Bauteile im sintergefügten Bereich an den Fluidleiteinrichtungen realisiert ist.

Im Fall von Polyvinylchlorid als Fluid kann beispielsweise das Verhältnis so gewählt werden, dass die strömungstechnische Verbindung nach dem Sinterfügen nach extern dicht gegenüber Polyvinylchlorid, aber luftdurchlässig ist, was zum Beispiel ein Einstecken des einzusteckenden Abschnitts in die Aussparung und somit die mechanische Verbindung vor dem Sintern erleichtert.

Beispielsweise kann vorm Sintern und Sinterfügen der einzusteckende Abschnitt einen runden Querschnitt von 2,5 mm aufweisen, aber die Aussparung einen Durchmesser von 2,58 mm haben.

Das Verhältnis zwischen der Größe der Aussparung im Grünteil des zweiten Bauteils und der Größe des einzusteckenden Abschnitts kann eine Auswirkung auf die Menge an Pulver haben, welches beim Einstecken des einzusteckenden Abschnitts in die Aussparung abgerieben wird. Je kleiner das Aufmaß, desto mehr Pulver wird abgerieben. Gegebenenfalls kann das abgeriebene Pulver die strömungstechnische Verbindung zusetzen und muss vorm Sintern entfernt werden, beispielsweise mit Druckluft.

Die Baueinheit kann ein Düsenwerkzeug sein, zur Ausbringung eines Beschichtungs- und/oder Dichtungsmaterials, wobei mittels des ersten additiven Fertigungsverfahrens als erstes Bauteil eine Spritzdüse gefertigt wird und mittels des zweiten additiven Fertigungsverfahrens ein Grünteil eines Werkzeugfußes gefertigt wird.

Bei dem Düsenwerkzeug kann es sich um ein Werkzeug handeln, das dazu eingerichtet ist, ein aushärtbares Beschichtungs- und/oder Abdichtungsmaterial zur Nahtabdichtung auf ein zu beschichtendes Objekt aufzutragen oder zu sprühen. Gegebenenfalls kann das zu beschichtende Objekt ein Blechfalz sein und das Düsenwerkzeug kann dazu eingerichtet sein, das Beschichtungs- und/oder Abdichtungsmaterial auf den Rand des Blechfalz aufzutragen. Das Düsenwerkzeug kann dabei als sogenannte Lackierdüse bezeichnet werden, mit der beispielsweise ein Lack ausbringbar ist.

Die Spritzdüse kann eine langestreckte Form haben sowie einen Düsenhals und eine Düsenöffnung umfassen. Außerdem kann der Düsenhals mehrfach gekrümmt sein und die Düsenöffnung derart angeordnet sein, dass in der Anwendung des Düsenwerkzeugs das Düsenwerkzeug an einer Vorderseite des zu beschichtenden Objekts positioniert werden kann und dabei die Düsenöffnung auf die Rückseite des zu beschichtenden Objekts gerichtet werden kann.

Im Falle eines Düsenwerkzeugs als Baueinheit umfasst der Werkzeugfuß die zweite Fluidleiteinrichtung. Diese kann einen Fluidzugang auf einer bezüglich der Aussparung gegenüberliegenden Seite des Werkzeugfußes aufweisen. Mittels des Fluidzugangs kann Fluid der zweiten Fluidleiteinrichtung zu- oder von dieser abgeführt werden.

Der Werkzeugfuß kann zudem Fixierungselemente umfassen, bei denen es sich beispielsweise um Öffnungen im Werkzeugfuß handelt, wobei die Öffnungen beispielsweise dazu eingerichtet sind, das Düsenwerkzeug mittels Befestigungselementen an einer Bewegungseinrichtung zu fixieren.

Durch die Herstellung des Düsenwerkzeugs mit dem erfindungsgemäßen Verfahren können im Vergleich zur direkten Herstellung des Düsenwerkzeugs als ein einzelnes Bauteil mittels beispielsweise Laserstrahlschmelzen Stützstrukturen entfallen und somit Material und Kosten gespart werden. Ebenfalls können aufwendige Nacharbeiten wie zum Beispiel das Entfernen von Stützstrukturen entfallen.

Sowohl die Spritzdüse als auch der Werkzeugfuß können unabhängig voneinander im jeweiligen additiven Fertigungsverfahren positioniert werden. Dadurch kann die Qualität sowohl beim Werkzeugfuß als auch bei der Spritzdüse bezüglich Maßhaltigkeit und/oder Oberflächenbeschaffenheit sowie die Qualität der Fluidleiteinrichtungen und der Düsenöffnung, aus der Beschichtungs- und/oder Abdichtungsmaterial wie z.B. PVC austreten kann, gesteigert werden. Gegebenenfalls kann der Werkzeugfuß während des zweiten additiven Fertigungsverfahrens ohne Überhang orientiert werden, was direkte Auswirkungen auf seine Qualität im Vergleich zur Herstellung des Düsenwerkzeugs als ein einzelnes Bauteil hat.

Ein weiterer Aspekt der Erfindung ist ein Verfahren zur zumindest bereichsweisen Beschichtung und/oder Abdichtung einer Karosserieeinheit, bei dem eine gemäß dem Verfahren zur Herstellung einer Baueinheit hergestellte Baueinheit zur Verfügung gestellt wird, und mittels dieser Baueinheit Beschichtungs- und/oder Abdichtungsmaterial auf und/oder in die Karosserieeinheit auf- bzw. eingebracht wird.

Dabei kann das Beschichtungs- und/oder Abdichtungsmaterial auf einen Blechfalz einer Karosserieeinheit aufgebracht werden. Der Blechfalz kann dabei um beispielsweise 5 mm bis 20 mm, wie z.B. 10 mm, umgeklappt sein und Bestandteil einer Tür einer Karosserieeinheit sein. Durch das Beschichtungs- und/oder Abdichtungsmaterial kann das Eindringen von Feuchtigkeit und somit Spaltkorrosion verhindert werden.

Die Baueinheit und/oder die Karosserieeinheit kann während dem Ausbringen des Beschichtungs- und/oder Abdichtungsmaterials durch eine Bewegungseinrichtung bewegt werden.

Gegebenenfalls befindet sich der zu beschichtende Bereich in einem Spalt der Karosserieeinheit und das Verfahren zur bereichsweisen Beschichtung und/oder Abdichtung umfasst ein zumindest teilweises Eintauchen der Baueinheit in den Spalt. Der Spalt kann dabei durch zwei überlappende Karosserieteile gebildet sein. Im Falle eines Düsenwerkzeugs als Baueinheit kann beispielsweise die Spritzdüse des Düsenwerkzeugs für die Beschichtung teilweise in den Spalt eingeführt werden. Gegebenenfalls können Betriebsmittel an der Karosserieeinheit eingesetzt werden, um den Blechfalz bezüglich des Düsenwerkzeugs zu positionieren.

Die Erfindung wird im Folgenden anhand der in den beiliegenden Zeichnungen dargestellten Ausführungsbeispiele erläutert.

Es zeigen
Fig. 1: eine Schnittansicht einer Spritzdüse als erstes Bauteil eines Düsenwerkzeugs;
Fig. 2: eine Schnittansicht eines Werkzeugfußes als zweites Bauteil des Düsenwerkzeugs;
Fig. 3: eine perspektivische Ansicht der mechanisch noch nicht verbundenen Bauteile bzw. Grünteile des Düsenwerkzeugs;
Fig. 4: eine perspektivische Ansicht des Düsenwerkzeugs als hergestellte Baueinheit;
Fig. 5: eine Temperaturabfolge eines Sinterzyklus; sowie
Fig. 6: eine perspektivische Ansicht des Düsenwerkzeugs bei der bereichsweisen Beschichtung einer Karosserieeinheit.

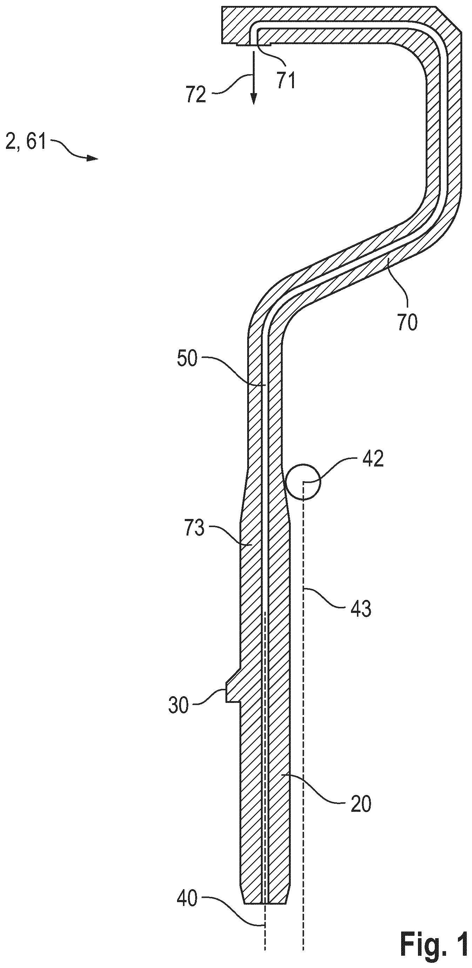

Figur 1 zeigt eine Schnittdarstellung einer Spritzdüse 61 als erstes Bauteil 2. Die Spritzdüse 61 hat einen mehrfach gekrümmten Düsenhals 70 und weist im unteren Teil einen aufgedickten Bereich 73 mit einem einzusteckenden Abschnitt 20 auf, an dem seitlich ein fahnenförmiges Formelement 30 angeordnet ist. Außerdem ist in Figur 1 eine erste Fluidleiteinrichtung 50 ersichtlich, die durch die gesamte Spritzdüse 61 führt und in einer Düsenöffnung 71 mündet. An der Düsenöffnung 71 ist eine Austrittsrichtung 72 eines auszubringenden Fluids dargestellt. Der Schwerpunkt 42 und die Schwerachse 43 der Spritzdüse 61 befinden sich bei der hier dargestellten Ausrichtung rechts außerhalb der Bauteilgeometrie. Der einzusteckende Abschnitt 20 weist eine erste Längsachse 40 auf, welche sich im dargestellten Zustand von der Schwerachse 43 unterscheidet.

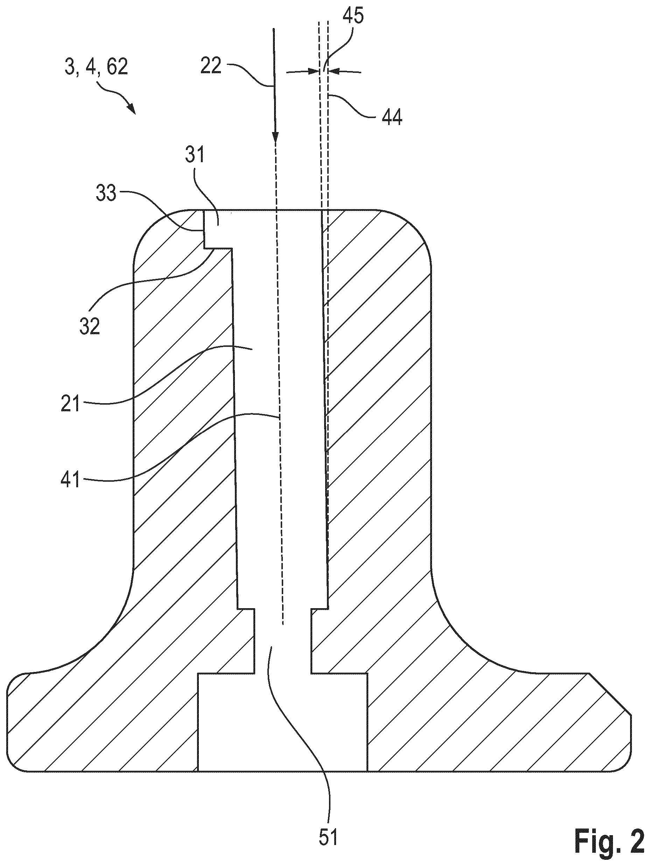

In Figur 2 ist ein Grünteil 4 eines Werkzeugfußes 62 in einer Schnittdarstellung dargestellt. Dabei handelt es sich um das Grünteil 4 eines zweiten Bauteils 3. Der Werkzeugfuß 62 umfasst eine Aussparung 21 zur Aufnahme des in Figur 1 abgebildeten einzusteckenden Abschnitts 20 des ersten Bauteils 2. Des Weiteren ist in der Wandung der Aussparung 21 eine Formelementaufnahme 31 mit einem ersten Blockadeelement 32 und einem zweiten Blockadeelement 33 angeordnet. Das erste Blockadeelement 32 dient zur Festlegung der Einstecktiefe des einzusteckenden Abschnitts 20 aus Figur 1 und das zweite Blockadeelement 33 dient zur Blockierung eines rotatorischen Freiheitsgrads des einzusteckenden Abschnitts 21 aus Figur 1 in Bezug zum Werkzeugfuß 62, und zwar des rotatorischen Freiheitsgrads um die zweite Längsachse 41 der Aussparung 21. Der Werkzeugfuß 62 umfasst eine zweite Fluidleiteinrichtung 51, welche vom Grund der Aussparung 21 auf die gegenüberliegende Seite des Werkzeugfußes 62 verläuft. Die Aussparung 21 ist gegenüber einer Vertikalen 44 geneigt und weist dabei einen Neigungswinkel 45 von 1° auf, um einer Verkippung der Aussparung 21 während des Sinterns durch ein durch die Spritzdüse 61 aus Figur 1 eingeleitetes gewichtskraftbedingtes Drehmoment auszugleichen. Der Werkzeugfuß 62 umfasst außerdem zwei kreisförmige Öffnungen 74, welche zur Hindurchführung von hier nicht dargestellten Befestigungselementen dienen, um den Werkzeugfuß 62 an einem ebenfalls nicht dargestellten externen Objekt zu fixieren.

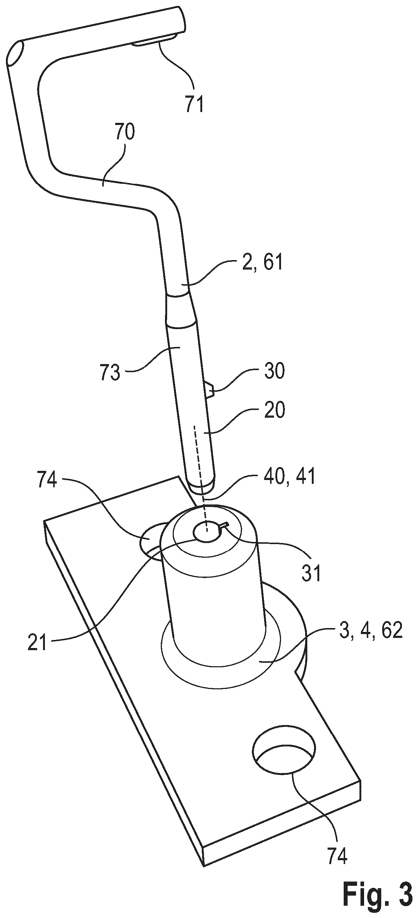

In Figur 3 sind das erste Bauteil 2 und das Grünteil 4 des zweiten Bauteils 3 von Figur 1 und 2 in einem mechanisch unverbundenen Zustand dargestellt. Die Spritzdüse 61 liegt dabei als gefestigtes erstes Bauteil 2 vor und der Werkzeugfuß 62 als ungesintertes Grünteil 4. Während die Spritzdüse 61 in einem additiven Fertigungsverfahren, wie z.B. Laserstrahlschmelzen, hergestellt wurde, bei dem direkt die finale Bauteilfestigkeit erreicht wird, ist der Werkzeugfuß 62 bzw. dessen Grünteil 4 in einem anderen additiven Fertigungsverfahren, wie z.B. Binder Jetting, hergestellt worden, bei dem das Grünteil 4 erst durch ein nachgeschaltetes Sintern seine volle Festigkeit erreicht. Dieser Sintervorgang ist im dargestellten Zustand noch nicht erfolgt. In Figur 3 ist zudem der aufgedickte Bereich 73 an der Spritzdüse 61 ersichtlich, der den einzusteckenden Abschnitt 20 umfasst, welcher mit dem seitlichen, fahnenförmigen Formelement 30 ausgestattet ist. Die Spritzdüse 61 ist derart positioniert, dass die erste Längsachse 40 des einzusteckenden Abschnitts 20 im dargestellten Zustand mit der zweiten Längsachse 41 der Aussparung 31 im Werkzeugfuß 62 fluchtet, wobei der einzusteckende Abschnitt 20 in Form und Größe komplementär zur Aussparung 21 ausgeführt ist und somit durch ein Einstecken des einzusteckenden Abschnitts 20 in die Aussparung 21 die Spritzdüse 61 und der Werkzeugfuß 62 mechanisch miteinander verbunden werden können. Außerdem zeigt Figur 3 die nutförmige Formelementaufnahme 31 in der Wandung der Aussparung 21 des Werkzeugfußes 62, in welche das fahnenförmige Formelement 30 beim Einstecken aufgenommen werden kann.

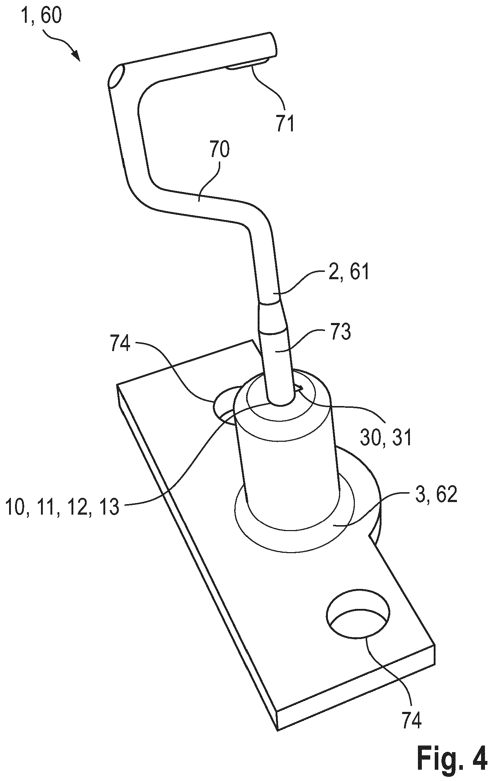

Figur 4 zeigt eine perspektivische Ansicht eines Düsenwerkzeugs 60 als hergestellte Baueinheit 1. Das Düsenwerkzeug 60 umfasst dabei das erste Bauteil 2 und das zweite Bauteil 3 von Figur 1, 2 und 3, wobei das erste Bauteil 2 die Spritzdüse 61 bezeichnet und das zweite Bauteil 3 den Werkzeugfuß 62. Die beiden Bauteile 2,3 sind mechanisch dadurch miteinander verbunden, dass der in Figur 1 und 3 ersichtliche einzusteckende Abschnitt 20 in die in Figur 2 und 3 ersichtliche Aussparung 21 eingesteckt ist. Das Formelement 30 ist in der Formelementaufnahme 31 aufgenommen. Die Wandstärke der Spritzdüse 61 ist im aufgedickten Bereich 73 im unteren Teil der Spritzdüse 61 verstärkt, an welchem die mechanische Verbindung 10 mit dem Werkzeugfuß 62 realisiert ist. Diese mechanische Verbindung 10 wurde beim nachgeschalteten Sintern des Grünteils 4 unter Wärmeinwirkung in einem Ofen mittels Sinterfügen gefestigt. Zum einen ist dabei das Grünteil 4 des Werkzeugfußes 62 geschrumpft und hat im sintergefügten Bereich 11 eine kraftschlüssige Verbindung 12 in Form einer Presspassung mit der Spritzdüse 61 ausgebildet. Zum anderen wurde im sintergefügten Bereich 11 beim Sinterfügen eine stoffschlüssige Verbindung 13 zwischen den beiden Bauteilen 2,3 erzeugt, da die metallischen Materialien der Spritzdüse 61 und des Werkzeugfußes 62 chemische Verbindungen eingegangen sind. Demzufolge ist das in Figur 3 gezeigte Düsenwerkzeug 60 eine Baueinheit 1, bei der das erste Bauteil 2 und das Grünteil 4 des zweiten Bauteils 3 durch unterschiedliche additive Fertigungsverfahren hergestellt und danach mittels Sinterfügen zu einer Baueinheit 1 gefügt wurden. Das jeweilige additive Fertigungsverfahren konnte also spezifisch für die unterschiedlichen Geometrien der Spritzdüse 61 und des Werkzeugfußes 62 gewählt werden. Außerdem konnten die beiden Bauteile 2,3 bei ihrer additiven Fertigung unabhängig voneinander positioniert werden und somit teilweise Stützstrukturen vermieden werden.

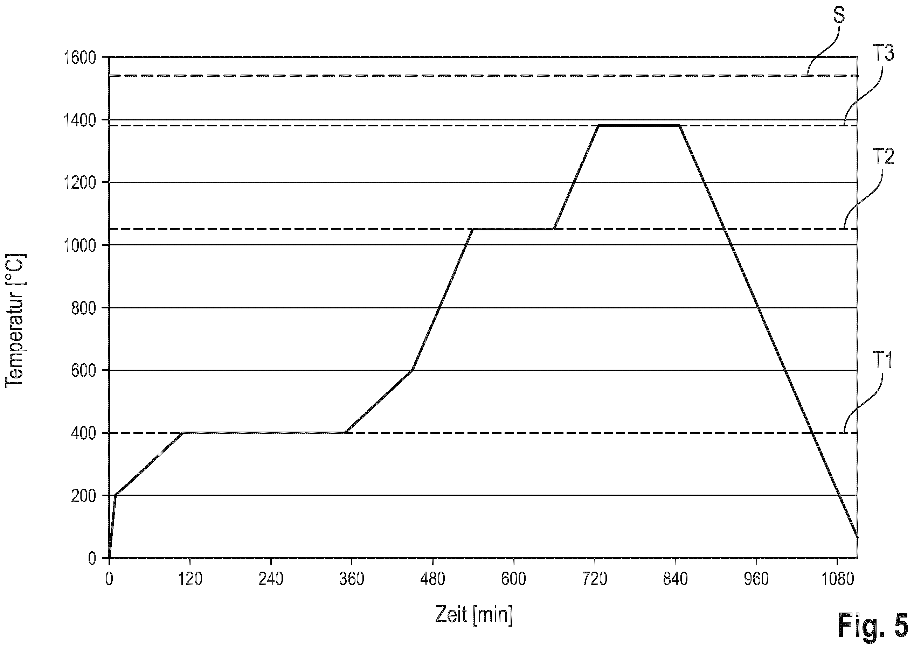

In Figur 5 ist eine typische Temperaturabfolge eines Sinterzyklus für ein durch Bindemittel stabilisiertes Grünteil aus Edelstahl 1.4404 dargestellt. Im Zuge der dargestellten Temperaturabfolge kann eine Sinterfügung mit einem weiteren Bauteil erfolgen, weshalb die Temperaturabfolge für das beschriebene Verfahren zur Herstellung einer Baueinheit geeignet ist. Dabei ist die Temperatur in Grad Celsius über die Zeit in Minuten aufgetragen. Bei einer ersten niedrigeren Temperatur T1 von 400°C findet die Entbinderung des Grünteils statt und bei einer zweiten, höheren Temperatur T2 von 1050°C wird das Grünteil gesintert. Dabei kann die Entbinderung bereits bei einer Temperatur unterhalb der niedrigeren Temperatur T1 und die Sinterung bereits bei einer Temperatur unterhalb der höheren Temperatur T2 einsetzen. Außerdem umfasst die dargestellte Temperaturabfolge eine dritte Temperatur, die Maximaltemperatur T3 von 1380°C, bei welcher die Sinterung fortgeführt wird. Die Maximaltemperatur T3 liegt dabei unterhalb der Schmelztemperatur S des Materials von 1550°C.

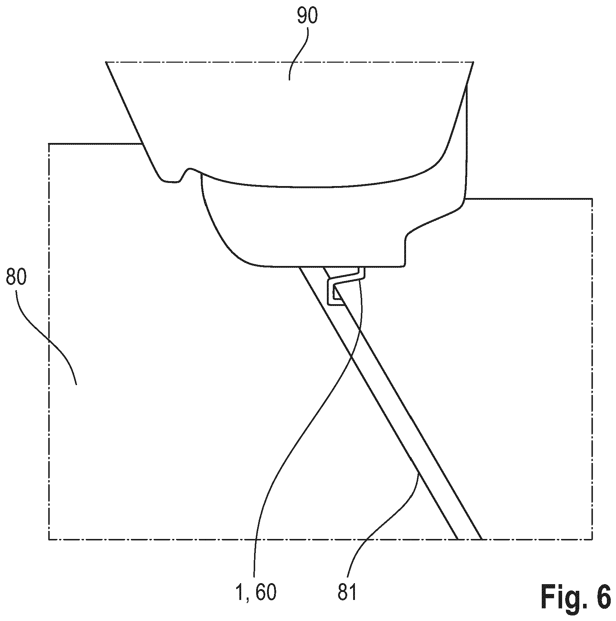

Figur 6 zeigt ein erfindungsgemäßes Verfahren zur Beschichtung einer Karosserieeinheit 80. Dabei ist ein Düsenwerkzeug 60 als erfindungsgemäß hergestellte Baueinheit 1 an einer Bewegungseinrichtung 90 fixiert und im dargestellten Zustand in einen Spalt 81 an einer Karosserieeinheit 80 teilweise eingetaucht, um im Spalt 81 ein Beschichtungsmaterial aufzubringen. Das Düsenwerkzeug 60 kann während des Beschichtungsvorgangs durch die Bewegungseinrichtung 90 entlang des Spalts im Spalt 81 bewegt werden.

### Bezugszeichenliste

- 1: Baueinheit
- 2: Erstes Bauteil
- 3: Zweites Bauteil
- 4: Grünteil
- 10: Mechanische Verbindung
- 11: Sintergefügter Bereich
- 12: Kraftschlüssige Verbindung
- 13: Stoffschlüssige Verbindung
- 20: Einzusteckender Abschnitt
- 21: Aussparung
- 22: Einsteckrichtung
- 30: Formelement
- 31: Formelementaufnahme
- 32: Erstes Blockadeelement
- 33: Zweites Blockadeelement
- 40: Erste Längsachse
- 41: Zweite Längsachse
- 42: Schwerpunkt
- 43: Schwerachse
- 44: Vertikale
- 45: Neigungswinkel
- 50: Erste Fluidleiteinrichtung
- 51: Zweite Fluidleiteinrichtung
- 60: Düsenwerkzeug
- 61: Spritzdüse
- 62: Werkzeugfuß
- 70: Düsenhals
- 71: Düsenöffnung
- 72: Austrittsrichtung
- 73: Aufgedickter Bereich
- 74: Öffnung
- 80: Karosserieeinheit
- 81: Spalt
- 90: Bewegungseinrichtung
- T1: Niedrigere Temperatur
- T2: Höhere Temperatur
- T3: Maximaltemperatur
- S: Schmelztemperatur

## Patentansprüche

1. Verfahren zur Herstellung einer Baueinheit (1), umfassend ein erstes Bauteil (2) und ein zweites Bauteil (3), bei dem das erste Bauteil (2) in einem ersten additiven Fertigungsverfahren hergestellt wird, ein Grünteil (4) des zweiten Bauteils (3) in einem zweiten additiven Fertigungsverfahren hergestellt wird, das erste Bauteil (2) und das Grünteil (4) mechanisch miteinander verbunden werden und danach gemeinsam erwärmt werden, wobei das Grünteil (4) durch die Wärmezufuhr gesintert wird und dabei die mechanische Verbindung (10) zwischen dem ersten Bauteil (2) und dem erzeugten zweiten Bauteil (3) durch Sinterfügen gefestigt wird.

2. Verfahren zur Herstellung einer Baueinheit (1) nach Anspruch 1, **dadurch gekennzeichnet, dass** das erste Bauteil (2) mittels Laserstrahlschmelzen hergestellt wird.

3. Verfahren zur Herstellung einer Baueinheit (1) nach wenigstens einem der vorherigen Ansprüche, **dadurch gekennzeichnet, dass** das Grünteil (4) des zweiten Bauteils (3) mittels Binder Jetting hergestellt wird.

4. Verfahren zur Herstellung einer Baueinheit (1) nach wenigstens einem der vorherigen Ansprüche, **dadurch gekennzeichnet, dass** das erste Bauteil (2) ein erstes Verhältnis R1 zwischen seinem Volumen und seiner äußeren Oberfläche aufweist, und dass das Grünteil (4) des zweiten Bauteils (3) ein Verhältnis R2 zwischen seinem Volumen und seiner äußeren Oberfläche aufweist, und dass das Verhältnis R2 größer ist als das Verhältnis R1.

5. Verfahren zur Herstellung einer Baueinheit (1) nach wenigstens einem der vorherigen Ansprüche, **dadurch gekennzeichnet, dass** beim Sintern und Sinterfügen eine Erwärmung mit einer Temperaturabfolge mit mindestens zwei verschiedenen Temperaturen durchlaufen wird und bei einer ersten niedrigeren Temperatur (T1) eine Entbinderung des Grünteils (4) des zweiten Bauteils (3) stattfindet und danach bei einer zweiten höheren Temperatur (T2) die Sinterung des Grünteils (4) und die Festigung der mechanischen Verbindung (10) mit dem ersten Bauteil (2) stattfindet, wobei beide Temperaturen (T1,T2) geringer sind als die Schmelztemperaturen (S) der Materialien des Grünteils (4) und des ersten Bauteils (2).

6. Verfahren zur Herstellung einer Baueinheit (1) nach wenigstens einem der vorherigen Ansprüche, **dadurch gekennzeichnet, dass** die mechanische Verbindung (10) des ersten Bauteils (2) und des Grünteils (4) des zweiten Bauteils (3) durch ein Einstecken eines einzusteckenden Abschnitts (20) des ersten Bauteils (2) mit einer Bewegung mit zumindest einer translatorischen Komponente entlang einer Einsteckrichtung (22) in eine Aussparung (21) des Grünteils (4) erfolgt.

7. Verfahren zur Herstellung einer Baueinheit (1) nach wenigstens einem der vorherigen Ansprüche, bei dem am einzusteckenden Abschnitt (20) des ersten Bauteils (2) ein Formelement (30) angeordnet ist und das Grünteil (4) des zweiten Bauteils (3) eine Formelementaufnahme (31) umfasst, welche zumindest ein Blockadeelement (32,33) aufweist, mit dem beim Einstecken des einzusteckenden Abschnitts (20) in die Aussparung (21) wenigstens ein translatorischer Freiheitsgrad und/oder rotatorischer Freiheitsgrad des einzusteckenden Abschnitts (21) in zumindest einer Bewegungsrichtung in Bezug auf das Grünteil (4) des zweiten Bauteils (3) blockierbar ist.

8. Verfahren zur Herstellung einer Baueinheit (1) nach wenigstens einem der vorherigen Ansprüche, **dadurch gekennzeichnet, dass** das Grünteil (4) des zweiten Bauteils (3) beim Sintern durch Schwindung um mindestens 5 % in wenigstens eine Richtung schrumpft und dadurch zumindest teilweise eine kraftschlüssige Verbindung (12) und/oder formschlüssige Verbindung zum ersten Bauteil (2) durch eine Presspassung und/oder einen Formschluss hergestellt wird.

9. Verfahren zur Herstellung einer Baueinheit (1) nach wenigstens einem der vorherigen Ansprüche, **dadurch gekennzeichnet, dass** die Materialien des ersten Bauteils (2) und des Grünteils (4) des zweiten Bauteils (3) beim Sinterfügen zumindest teilweise eine stoffschlüssige Verbindung (13) eingehen.

10. Verfahren zur Herstellung einer Baueinheit (1) nach Anspruch 9, **dadurch gekennzeichnet, dass** bei der Herstellung des ersten Bauteils (2) am einzusteckenden Abschnitt (20) zumindest bereichsweise eine raue Oberfläche mit einer gemittelten Rautiefe Rz zwischen 50 µm und 80 µm erzeugt wird, durch welche beim Einstecken des einzusteckenden Abschnitts (20) in die Aussparung (21) des Grünteils (4) von der Wandung der Aussparung (21) Material abgerieben wird, welches beim Sinterfügen eine stoffschlüssige Verbindungsfestigkeit erhöht.

11. Verfahren zur Herstellung einer Baueinheit (1) nach einem der Ansprüche 6 bis 10, **dadurch gekennzeichnet, dass** der einzusteckende Abschnitt (20) des ersten Bauteils (2) eine erste Längsachse (40) und das erste Bauteil (2) eine Schwerachse (43) aufweist, welche abweichend von der ersten Längsachse (40) verläuft, und die Aussparung (21) des Grünteils (4) des zweiten Bauteils (3) eine zweite Längsachse (41) aufweist, wobei das erste Bauteil (2) und das Grünteil (4) des zweiten Bauteils (3) derart zueinander positioniert werden, dass die Längsachsen (40,41) miteinander fluchten, wobei die Einsteckrichtung (22) von einer durch die Öffnung der Aussparung (21) an der dem ersten Bauteil (2) zugewandten Seite verlaufenden Vertikalen (22) abweichend verläuft, und zwar an einer der Schwerachse (43) abgewandten Seite der Vertikalen (22).

12. Verfahren zur Herstellung einer Baueinheit (1) nach wenigstens einem der vorherigen Ansprüche, **dadurch gekennzeichnet, dass** sowohl bei der Herstellung des ersten Bauteils (2) eine erste Fluidleiteinrichtung (50) als auch bei der Herstellung des Grünteils (4) des zweiten Bauteils (3) eine zweite Fluidleiteinrichtungen (51) in dem jeweiligen Bauteil (2) oder Grünteil (4) erzeugt werden, und dass das erste Bauteil (2) und das Grünteil (4) anschließend derart mechanisch miteinander verbunden werden und deren Verbindung mittels Sinterfügen gefestigt wird, dass die Fluidleiteinrichtungen (50,51) in der Baueinheit (1) strömungstechnisch in Verbindung stehen.

13. Verfahren zur Herstellung einer Baueinheit (1) nach Anspruch 12, **dadurch gekennzeichnet, dass** die Größe der Aussparung (21) im Grünteil (4) des zweiten Bauteils (3) und die Größe des einzusteckenden Abschnitts (20) des ersten Bauteils (2) in einem derartigen Verhältnis zueinander hergestellt werden, dass nach dem Sinterfügen eine flüssigkeitsdichte und luftdurchlässige Verbindung der Bauteile (2,3) im sintergefügten Bereich (11) an den Fluidleiteinrichtungen (50,51) realisiert ist.

14. Verfahren zur Herstellung einer Baueinheit (1) nach einem der Ansprüche 12 bis 13, **dadurch gekennzeichnet, dass** die Baueinheit (1) ein Düsenwerkzeug (60) ist, zur Ausbringung eines Beschichtungs- und/oder Dichtungsmaterials, und dass mittels des ersten additiven Fertigungsverfahrens als erstes Bauteil (2) eine Spritzdüse (61) gefertigt wird und mittels des zweiten additiven Fertigungsverfahrens ein Grünteil (4) eines Werkzeugfußes (62) gefertigt wird.

15. Verfahren zur zumindest bereichsweisen Beschichtung und/oder Abdichtung einer Karosserieeinheit (80), bei dem eine gemäß dem Verfahren zur Herstellung einer Baueinheit (1) nach Anspruch 1 bis 14 hergestellte Baueinheit (1) zur Verfügung gestellt wird, und mittels dieser Baueinheit (1) Beschichtungs- und/oder Abdichtungsmaterial auf und/oder in die Karosserieeinheit (80) auf- bzw. eingebracht wird.
